# EUROPÄISCHE PATENTANMELDUNG

(11) **EP 3 447 531 A2**
(43) Veröffentlichungstag der Anmeldung: **27.02.2019**
(21) Anmeldenummer: 18187706.9
(22) Anmeldetag: 07.08.2018
(51) Int. Cl.: G01S 13/93

(54) **VERFAHREN ZUM ÜBERWACHEN EINES UMGEBUNGSBEREICHES EINES GESPANNS, ÜBERWACHUNGSVORRICHTUNG, FAHRERASSISTENZSYSTEM SOWIE GESPANN**

(30) Priorität: 15.08.2017 DE 102017118588
(71) Anmelder: Valeo Schalter und Sensoren GmbH, 74321 Bietigheim-Bissingen (DE)
(72) Erfinder: Geiger, Tobias, 74321 Bietigheim-Bissingen (DE); Koudijs, Gerald, 74321 Bietigheim-Bissingen (DE)

(57) **Zusammenfassung**

Die Erfindung betrifft ein Verfahren zum Überwachen eines Umgebungsbereiches (6) eines durch ein Kraftfahrzeug (1) und einen Anhänger (3) gebildeten Gespanns (1), bei welchem zumindest ein Radarsensor (7) an einem Heckbereich (8) des Anhängers (3) zum Erfassen von Radarsensordaten aus dem Umgebungsbereich (6) hinter dem Anhänger (3) angeordnet wird und die erfassten Radarsensordaten an eine Steuereinrichtung (10) des Kraftfahrzeugs (2) übertragen werden. Die Erfindung betrifft außerdem eine Überwachungsvorrichtung (5), ein Fahrerassistenzsystem sowie ein Gespann (1).

## Beschreibung

Die Erfindung betrifft ein Verfahren zum Überwachen eines Umgebungsbereiches eines durch ein Kraftfahrzeug und einen Anhänger gebildeten Gespanns. Die Erfindung betrifft außerdem eine Überwachungsvorrichtung, ein Fahrerassistenzsystem sowie ein Gespann.

Es ist bereits aus dem Stand der Technik bekannt, einen Fahrer eines durch ein Kraftfahrzeug und einen Anhänger gebildeten Gespanns beim Rangieren mit dem Gespann zu unterstützen. Da der Umgebungsbereich hinter dem Kraftfahrzeug üblicherweise durch den Anhänger blockiert ist und der Umgebungsbereich hinter dem Anhänger daher nicht oder nur kaum einsehbar für den Fahrer ist, ist es bereits bekannt, Kameras an einem Heckbereich des Anhängers anzuordnen und den von den Kameras erfassten Umgebungsbereich hinter dem Anhänger in Bildern zu erfassen. Die Bilder können dem Fahrer dann auf einer Anzeigeeinrichtung des Kraftfahrzeugs angezeigt werden. Dies ist beispielsweise in der DE 10 2014 220 586 A1 beschrieben.

Aus der DE 10 2016 008 030 A1 ist ein Abstandswarnsystem für ein Kraftfahrzeug sowie ein abstandserkennendes System für einen an das Kraftfahrzeug angehängten Anhänger bekannt. Dabei ist das abstandserkennende System des Anhängers mit dem Abstandswarnsystem des Kraftfahrzeugs über eine Datenleitung zur Übertragung von Informationen verbunden. Das abstandserkennende System des Anhängers ist dabei steuergerätefrei ausgebildet. Die DE 100 35 124 B4 offenbart eine elektronische Abstandswarnanlage für ein Zugfahrzeug und einen Anhänger. Dabei weist die Abstandswarnanlage Mittel zum Übertragen von Signalwellen auf, welche an dem Zugfahrzeug befindliche Abstandssensoren zum Senden/Empfangen von Übertragungssignalen aufweisen. Darüber hinaus umfassen die Mittel zur Übertragung der Signalwellen zusätzlich an dem Anhänger des Zugfahrzeugs befindliche Abstandssensoren.

Es ist Aufgabe der vorliegenden Erfindung, eine Lösung bereitzustellen, wie ein Umgebungsbereich eines Gespanns besonders kostengünstig, einfach und zuverlässig überwacht werden kann.

Diese Aufgabe wird erfindungsgemäß durch ein Verfahren, eine Überwachungsvorrichtung, ein Fahrerassistenzsystem sowie ein Gespann mit den Merkmalen gemäß den jeweiligen unabhängigen Patentansprüchen gelöst. Vorteilhafte Ausführungsformen der Erfindung sind Gegenstand der abhängigen Patentansprüche, der Beschreibung und der Figuren.

Bei einem Aspekt eines erfindungsgemäßen Verfahrens zum Überwachen eines Umgebungsbereiches eines durch ein Kraftfahrzeug und einen Anhänger gebildeten Gespanns wird zumindest ein Radarsensor insbesondere an einem Heckbereich des Anhängers zum Erfassen von Radarsensordaten aus dem Umgebungsbereich hinter dem Anhänger angeordnet. Die erfassten Radarsensordaten werden insbesondere an eine Steuereinrichtung des Kraftfahrzeugs übertragen.

Bei einer besonders bevorzugten Ausführungsform eines erfindungsgemäßen Verfahrens zum Überwachen eines Umgebungsbereiches eines durch ein Kraftfahrzeug und einen Anhänger gebildeten Gespanns wird zumindest ein Radarsensor an einem Heckbereich des Anhängers zum Erfassen von Radarsensordaten aus dem Umgebungsbereich hinter dem Anhänger angeordnet und die erfassten Radarsensordaten werden an eine Steuereinrichtung des Kraftfahrzeugs übertragen.

Zur Erfindung gehört auch eine Überwachungsvorrichtung für einen Anhänger eines aus einem Kraftfahrzeug und dem Anhänger gebildeten Gespanns, welche dazu ausgelegt ist, einen Umgebungsbereich des Gespanns zu überwachen. Gemäß einer Ausführungsform der Überwachungsvorrichtung weist diese insbesondere zumindest einen Radarsensor auf, welcher an einem Heckbereich des Anhängers zum Erfassen von Radarsensordaten aus dem Umgebungsbereich hinter dem Anhänger montierbar ist und welcher insbesondere dazu ausgelegt ist, die erfassten Radarsensordaten an eine Steuereinrichtung des Kraftfahrzeugs zu übermitteln. Gemäß einer besonders bevorzugten Ausführungsform der Überwachungsvorrichtung weist diese zumindest einen Radarsensor auf, welcher an einem Heckbereich des Anhängers zum Erfassen von Radarsensordaten aus dem Umgebungsbereich hinter dem Anhänger montierbar ist und welcher dazu ausgelegt ist, die erfassten Radarsensordaten an eine Steuereinrichtung des Kraftfahrzeugs zu übermitteln.

Mittels des Verfahrens kann ein Fahrer eines durch das Kraftfahrzeug und den Anhänger gebildeten Gespanns beim Manövrieren mit dem Gespann unterstützt werden.

Insbesondere kann der Fahrer beim Rückwärtsfahren mit dem Gespann unterstützt werden. Der Anhänger kann beispielsweise ein Wohnanhänger, ein Pferdeanhänger, ein Tandemanhänger oder ein Einachsanhänger sein. Der Anhänger kann über eine Deichsel an eine Anhängerkupplung des Kraftfahrzeugs angehängt bzw. angekoppelt werden und ist somit schwenkbar gegenüber dem Kraftfahrzeug. Im angekoppelten Zustand des Anhängers ist ein Bereich hinter dem Anhänger für den Fahrer üblicherweise nicht oder nur schwer einsehbar, da die Sicht nach hinten für den Fahrer durch den Anhänger blockiert ist. Insbesondere beim Rückwärtsfahren oder beim Ausscheren mit dem Gespann kann es durch die eingeschränkte Sicht vorkommen, dass Objekte bzw. Hindernisse hinter dem Anhänger übersehen werden und somit eine Kollision mit den Objekten droht. Daher wird der Umgebungsbereich hinter dem Anhänger mit dem zumindest einen Radarsensor überwacht, sodass die Objekte erkannt werden können. Die Objekte können dabei stationäre Objekte bzw. Hindernisse oder dynamische Objekte, beispielsweise Fußgänger oder sich dem Gespann von hinten nähernde andere Fahrzeuge, sein.

Zum Erfassen von Objekten hinter und schräg hinter dem Anhänger wird der Radarsensor an dem Heckbereich des Anhängers angeordnet bzw. montiert, sodass eine Blickrichtung bzw. ein Erfassungsbereich des Radarsensors ausgehend von dem Heckbereich des Anhängers nach hinten bzw. in Rückwärtsrichtung gerichtet ist. Der Radarsensor kann dabei dauerhaft an dem Anhänger befestigt bzw. fixiert werden oder nur temporär an dem Anhänger befestigt werden. Der Radarsensor kann Radarsignale in Form von elektromagnetischen Wellen in den Umgebungsbereich aussenden und die in dem Umgebungsbereich an einem Objekt reflektierten Radarsignale wieder empfangen. Aus den Radarsignalen können Informationen über das Objekt, beispielsweise ein Winkel bzw. eine Richtung zum Objekt, eine Entfernung bzw. ein Abstand zum Objekt und eine Relativbewegung zwischen dem Radarsensor bzw. dem Anhänger und dem Objekt extrahiert werden. Die Radarsignale können dabei von einer internen Steuereinrichtung des Radarsensors hinsichtlich der Objektinformationen ausgewertet werden, sodass als die Radarsensordaten die Objektinformationen an die Steuereinrichtung des Kraftfahrzeugs übermittelt werden. Auch können die Radarsignale als die Radarsensordaten von dem Radarsensor unausgewertet an die Steuereinrichtung des Kraftfahrzeugs übermittelt werden, welche daraufhin die Auswertung der Radarsignale vornimmt.

Radarsensoren weisen den Vorteil auf, dass sie sichtunabhängig arbeiten können. Dies bedeutet, dass Umgebungsbedingungen, beispielsweise Dunkelheit, Schnee, Nebel, Regen, etc. die Messungen des Radarsensors nahezu nicht beeinflussen. Darüber hinaus weisen Radarsensoren eine hohe Reichweite auf. Mittels Radarsensoren, welche für an dem Anhänger eines Gespanns angeordnet werden, kann also der Umgebungsbereich hinter dem Anhänger besonders zuverlässig überwacht werden.

Vorzugsweise werden die Radarsensordaten drahtlos an die Steuereinrichtung des Kraftfahrzeugs übertragen. Insbesondere können der Radarsensor und die Steuereinrichtung bidirektional über die Drahtloskommunikationsverbindung kommunizieren. Über die bidirektionale Drahtlosverbindung können somit auch Steuersignale von der Steuereinrichtung des Kraftfahrzeugs an den zumindest einen Radarsensor übertragen werden. Der zumindest eine Radarsensor kann also ferngesteuert werden. Beispielsweise können die Radarsensordaten des Radarsensors über Nahfeldkommunikation und/oder WLAN an die Steuereinrichtung übertragen werden. Zum Kommunizieren können der ferngesteuerte Radarsensor und die Steuereinrichtung jeweilige Transmitter zum Senden und Empfangen von Signalen aufweisen. Durch das drahtlose Übertragen der Radarsensordaten ergibt sich der Vorteil, dass der Anhänger besonders einfach mit der Überwachungsvorrichtung nachgerüstet werden kann. Somit ist eine Verwendung der Überwachungsvorrichtung auch bei Anhängern möglich, welche nicht mit dem Radarsensor ausgeliefert wurden und/oder welche beispielsweise baujahrbedingt keinerlei Datenleitungen zur Kommunikation mit dem Kraftfahrzeug aufweisen, indem die Drahtlosverbindung zwischen dem Radarsensor und der Steuereinrichtung des Kraftfahrzeugs aufgebaut wird und die Radarsensordaten einfach drahtlos von dem Radarsensor an die Steuereinrichtung des Kraftfahrzeugs übertragen werden.

Besonders bevorzugt wird der zumindest eine Radarsensor als ein portabler Radarsensor ausgebildet, welcher zerstörungsfrei lösbar an dem Heckbereich des Anhängers montiert wird. Der Radarsensor ist somit ein mobiler Radarsensor, welcher beispielsweise von dem Fahrer des Gespanns nur temporär an dem Anhänger angeordnet werden kann. Der Radarsensor kann also zum temporären Anordnen beliebig an dem Anhänger montiert und wieder demontiert werden. Beispielsweise kann zum zerstörungsfrei lösbaren Montieren des Radarsensors eine Aufnahmeeinrichtung für den zumindest einen Radarsensor an dem Heckbereich des Anhängers dauerhaft montiert werden. Eine solche Aufnahmeeinrichtung kann beispielsweise eine Halterung aufweisen, welche mit einem Rastelement des Radarsensors verrastbar ist. So kann der Radarsensor beispielsweise über eine Rastverbindung besonders einfach an dem Anhänger angeordnet bzw. fixiert werden. Sobald der Radarsensor beispielsweise für einen anderen Anhänger benötigt wird, kann die Verbindung zwischen dem Anhänger und dem Radarsensor wieder gelöst werden, sodass der Radarsensor zerstörungsfrei lösbar an einem anderen Anhänger angeordnet werden kann. Somit kann ein einzelner Radarsensor für eine Vielzahl von Anhängern verwendet werden. Diese Ausführungsform ist besonders vorteilhaft und kostengünstig für Fahrer, welche beispielsweise mehrere Anhänger für das Kraftfahrzeug aufweisen.

Es erweist sich als vorteilhaft, wenn der zumindest eine Radarsensor nach dem Montieren des zumindest einen Radarsensors an dem Anhänger automatisch kalibriert wird. Die Kalibrierung kann beispielsweise durch die Steuereinrichtung des Kraftfahrzeugs erfolgen. Im Falle eines portablen Radarsensors kann dieser kalibriert werden, sobald der Radarsensor an dem Anhänger angeordnet wird. Insbesondere durch das temporäre Anordnen des Radarsensors kann es vorkommen, dass der Radarsensor bei jedem Anordnen eine andere Montageposition am dem Anhänger aufweist. Durch die veränderliche Montageposition kann sich beispielsweise die Blickrichtung des Radarsensors verändern. Die Kenntnis der Montageposition ist jedoch wichtig, um die relativen Lagen von erfassten Objekten im Umgebungsbereich des Gespanns zu dem Gespann korrekt bestimmen zu können. Durch die Kalibrierung, welche insbesondere bei jeder erneuten Montage des Radarsensors am Anhänger durchgeführt wird, kann insbesondere die tatsächliche Montageposition des zumindest einen Radarsensors am Anhänger bestimmt werden. Durch die Kalibrierung kann in vorteilhafter Weise gewährleistet werden, dass Objekte in dem Umgebungsbereich besonders genau lokalisiert werden können und somit der Umgebungsbereich des Gespanns besonders zuverlässig überwacht werden kann.

Dabei kann vorgesehen sein, dass zum Kalibrieren des zumindest einen Radarsensors Sensordaten zumindest einer Sensoreinrichtung des Kraftfahrzeugs und Radarsensordaten des zumindest einen Radarsensors empfangen werden, eine erste den Umgebungsbereich des Gespanns beschreibende Umfeldkarte basierend auf den Sensordaten der zumindest einen Sensoreinrichtung des Kraftfahrzeugs bestimmt wird, eine zweite den Umgebungsbereich des Gespanns beschreibende Umfeldkarte basierend auf den Radarsensordaten des zumindest einen Radarsensors bestimmt wird und anhand eines Vergleiches der Umfeldkarten ein Toleranzbereich einer Montageposition des zumindest einen Radarsensor an dem Anhänger bestimmt wird. Die Kalibrierung bzw. Selbstkalibrierung des zumindest einen Radarsensors erfolgt hier über einen sogenannten SLAM-Algorithmus (SLAM-"Simultaneous Localization and Mapping", Simultane Lokalisierung und Kartenerstellung), bei welchem gleichzeitig die Umfeldkarten erstellt werden und die Posen der zumindest einen Sensoreinrichtung und des zumindest einen Radarsensor innerhalb der jeweiligen Umfeldkarten geschätzt werden. Die Umfeldkarten beschreiben den Umgebungsbereich des Gespanns objektbasiert.

Zum Bestimmen der ersten Umfeldkarte können anhand der Sensordaten der zumindest einen Sensoreinrichtung des Kraftfahrzeugs erste Detektionspunkte in dem Umgebungsbereich erfasst werden, welche zu bestimmten Objekten in dem Umgebungsbereich korrespondieren. Außerdem werden räumliche Lagen der ersten Detektionspunkte erfasst. Zum Bestimmen der zweiten Umfeldkarte können anhand der Radarsensordaten des zumindest einen Radarsensors des Anhängers zweite Detektionspunkte in dem Umgebungsbereich erfasst werden, welche ebenfalls zu Objekten in dem Umgebungsbereich korrespondieren. Außerdem werden räumliche Lagen der zweiten Detektionspunkte erfasst. Die räumlichen Lagen der ersten und zweiten Detektionspunkte können dabei in ein gemeinsames Koordinatensystem überführt werden, beispielsweise indem die ersten und zweiten Detektionspunkte in einer gemeinsamen Umfeldkarte dargestellt werden. Dann werden die zueinander korrespondierenden ersten und zweiten Detektionspunkte identifiziert. Die zueinander korrespondierenden ersten und zweiten Detektionspunkte sind insbesondere diejenigen Detektionspunkte, welche zu denselben Objekten in dem Umgebungsbereich korrespondieren bzw. gehören. Anhand des Vergleichs der ersten und zweiten Detektionspunkte, insbesondere anhand eines Vergleiches der räumlichen Lagen der ersten und zweiten Detektionspunkte, kann der Toleranzbereich für die Montageposition des Radarsensors am Anhänger bestimmt werden. Der Toleranzbereich beschreiben dabei die möglichen Positionen, an welchen sich der Radarsensor zum Zeitpunkt des Erfassens der Radarsensordaten befindet. Basierend auf den Umfeldkarten kann also die Anzahl von möglichen Montagepositionen des zumindest einen Radarsensors eingeschränkt werden.

In einer Weiterbildung der Erfindung wird zum Bestimmen einer tatsächlichen Montageposition des zumindest einen Radarsensors am Anhänger zumindest ein Parameter des Anhängers bestimmt, wobei der zumindest eine Parameter des Anhängers in Abhängigkeit von zumindest einer vorbestimmten stationären Kenngröße des Kraftfahrzeugs und/oder zumindest einer erfassten dynamischen Kenngröße des Kraftfahrzeugs und/oder zumindest einer erfassten dynamischen Kenngröße des Anhängers bestimmt wird. Beispielsweise kann in Abhängigkeit von dem Toleranzbereich, welcher anhand der Umfeldkarten bestimmt wurde, und in Abhängigkeit von dem zumindest einen Parameter des Anhängers die tatsächliche Montageposition des zumindest einen Radarsensors am Anhänger bestimmt werden. Anhand der Umfeldkarten können die möglichen Montagepositionen zwar näherungsweise bestimmt werden, die tatsächliche Montageposition ist jedoch insbesondere abhängig von einer aktuellen Lage des Anhängers bezüglich des Kraftfahrzeugs sowie einer Geometrie des Anhängers. Der zumindest eine Parameter des Anhängers beschreibt dabei die aktuelle Lage des Anhängers bezüglich des Kraftfahrzeugs sowie die Geometrie des Anhängers.

Insbesondere wird als der zumindest eine Parameter des Anhängers ein Anhängewinkel des Anhängers und/oder ein Abstand zwischen einer Anhängerkupplung am Kraftfahrzeug und einer Achse des Anhängers bestimmt. Der Anhängewinkel ist dabei ein Schwenkwinkel zwischen einer Längsachse des Kraftfahrzeugs und einer Längsachse des Anhängers. Der Anhängewinkel beträgt insbesondere 0°, wenn der Anhänger nicht ausgeschwenkt ist, beispielsweise wenn das Gespann geradeaus fährt und die Längsachse des Anhängers entlang der Längsachse des Kraftfahrzeugs orientiert ist. Im ausgeschenkten Zustand des Anhängers, beispielsweise während einer Kurvenfahrt des Gespanns, ist der Anhängewinkel von 0° verschieden und die Längsachse des Anhängers ist schräg zu der Längsachse des Kraftfahrzeugs orientiert. Der Anhängewinkel ist also abhängig von einer Fahrtrichtung des Gespanns und beschreibt die aktuelle Lage des Anhängers bezüglich des Kraftfahrzeugs. Außerdem ist die Montageposition abhängig von dem Abstand zwischen der Anhängerkupplung am Kraftfahrzeug und der Achse des Anhängers, welcher die Geometrie des Anhängers beschreibt. Dieser Abstand setzt sich zusammen aus der Länge einer Deichsel des Anhängers sowie dem Abstand zwischen einer dem Heckbereich des Kraftfahrzeugs zugewandten Frontseite des Anhängers und der Achse des Anhängers.

Vorzugsweise wird als die zumindest eine stationäre Kenngröße des Kraftfahrzeugs ein Radstand des Kraftfahrzeugs und/oder ein Abstand zwischen einer Hinterachse und einer Anhängerkupplung des Kraftfahrzeugs vorgegeben. Als die zumindest eine dynamische Kenngröße des Kraftfahrzeugs wird insbesondere ein Radlenkwinkel von Vorderrädern und/oder ein Radlenkwinkel von Hinterrädern des Kraftfahrzeugs erfasst und als die zumindest eine dynamische Kenngröße des Anhängers wird ein Anhängewinkel des Anhängers erfasst. Der Anhängewinkel kann beispielsweise mittels einer Sensoreinrichtung in der Anhängerkupplung erfasst werden. Die Radlenkwinkel können mittels einer Sensoreinrichtung des Kraftfahrzeugs erfasst werden. Anhand der Radlenkwinkel kann eine aktuelle Fahrtrichtung des Gespanns bestimmt werden. Die stationären Kenngrößen des Kraftfahrzeugs sind insbesondere geometrische, unveränderliche Parameter des Kraftfahrzeugs, welche die Fahrdynamik des Kraftfahrzeugs ebenfalls beeinflussen. Der gemessene Anhängewinkel des Anhängers, die Radlenkwinkel und die geometrischen Kenngrößen des Kraftfahrzeugs können nun dazu verwendet werden, als den zumindest einen Parameter des Anhängers den Abstand zwischen der Anhängerkupplung und der Anhängerachse zu bestimmen. Insbesondere wird zusätzlich der Anhängewinkel korrigiert, sodass als der zumindest eine Parameter des Kraftfahrzeugs insbesondere der korrigierte Anhängewinkel bestimmt wird. Darüber hinaus kann anhand des gemessenen Anhängewinkels des Anhängers, anhand der Radlenkwinkel und anhand der geometrischen Kenngrößen des Kraftfahrzeugs ein Parameter des Radarsensors, insbesondere ein Sensoroffset, bestimmt werden, welcher abhängig ist von dem verwendeten Radarsensor.

Vorzugsweise wird der zumindest eine Parameter des Anhängers in Abhängigkeit von der zumindest einen vorbestimmten stationären Kenngröße des Kraftfahrzeugs und/oder der zumindest einen erfassten dynamischen Kenngröße des Kraftfahrzeugs und/oder der zumindest einen erfassten dynamischen Kenngröße des Anhängers mittels eines Kalman-Filters bestimmt. Die Geometrie des Kraftfahrzeugs, die Radlenkwinkel des Kraftfahrzeugs sowie der gemessene Anhängewinkel des Anhängers dienen als Eingangsgrößen für das Kalman-Filter, insbesondere ein Uncented Kalman-Filter (UKF). Das Kalman-Filter kann basierend auf diesen Eingangsgrößen den korrigierten Anhängewinkel, den Abstand zwischen der Anhängerkupplung und der Achse des Anhängers und den Sensoroffset des Radarsensors schätzen.

In einer Weiterbildung der Erfindung wird anhand des zumindest einen Parameters des Anhängers von dem Anhänger in dem Umgebungsbereich belegter Bereich erkannt, wobei anhand des von dem Anhänger belegten Bereiches Messpunkte in Sensordaten einer fahrzeugseitigen Sensoreinrichtung als zu dem Anhänger oder zu dem Umgebungsbereich gehörig klassifiziert werden. Im Falle eines an das Kraftfahrzeug angehängten Anhängers kann es vorkommen, dass der Anhänger in Erfassungsbereichen der fahrzeugseitigen Sensoreinrichtungen liegt. Der Anhänger stellt jedoch kein Hindernis für das Kraftfahrzeug dar. Daher sollen die Messpunkte, welche beispielsweise von Reflexionen der Sensorsignale der fahrzeugseitigen Sensoreinrichtung an einer Außenseite des Anhängers stammen, aus den Sensordaten herausgefiltert werden. Wenn der Bereich des Umgebungsbereiches, welcher von dem Anhänger überdeckt bzw. belegt ist, bekannt ist, können beispielsweise in der ersten Umfeldkarte, welche basierend auf den Sensordaten der fahrzeugseitigen Sensoreinrichtung erstellt wurde, die Messpunkte des Anhängers identifiziert werden und beispielsweise ausgeblendet werden. Somit kann verhindert werden, dass der Fahrer unnötigerweise auf den Anhänger gewarnt wird, welcher tatsächlich kein Hindernis ist.

In einer weiteren Ausführungsform der Erfindung wird eine erste den Umgebungsbereich beschreibende Umfeldkarte basierend auf Sensordaten zumindest einer Sensoreinrichtung des Kraftfahrzeugs bestimmt, eine zweite den Umgebungsbereich beschreibende Umfeldkarte wird basierend auf den Radarsensordaten des zumindest einen Radarsensors bestimmt und die erste und die zweite Umfeldkarte werden zu einer gemeinsamen Umfeldkarte fusioniert bzw. kombiniert. In der gemeinsamen Umfeldkarte werden also die von der fahrzeugseitigen Sensoreinrichtung erfassten Objekte und die von dem zumindest einen anhängerseitigen Radarsensor erfassten Objekte hinterlegt, wobei Objekte welche von der fahrzeugseitigen Sensoreinrichtung und dem zumindest eine anhängerseitigen Radarsensor erfasst wurden, zusammengelegt werden.

Die Erfindung betrifft außerdem ein Fahrerassistenzsystem für ein Gespann mit einer erfindungsgemäßen Überwachungsvorrichtung sowie einer Steuereinrichtung zum Empfangen der Radarsensordaten. Das Fahrerassistenzsystem kann den Fahrer des Gespanns beim Manövrieren mit dem Gespann unterstützen. Beispielsweise kann der Fahrer beim Rückwärtsfahren und/oder bei Überholmanövern mit dem Gespann unterstützt werden. Dazu kann das Gespann basierend auf den anhand des Radarsensors des Anhängers erfassten Objekten in dem Umgebungsbereich von der Steuereinrichtung des Kraftfahrzeugs zumindest semi-autonom manövriert werden und/oder Warnsignale für den Fahrer des Gespanns zum Vermeiden einer Kollision des Gespanns mit den Objekten generiert werden.

Ein erfindungsgemäßes Gespann umfasst ein Kraftfahrzeug, einen Anhänger sowie ein erfindungsgemäßes Fahrerassistenzsystem, wobei der zumindest eine Radarsensor der Überwachungsvorrichtung an dem Anhänger montiert ist. Das Kraftfahrzeug ist insbesondere als ein Personenkraftwagen ausgebildet.

Die mit Bezug auf das erfindungsgemäße Verfahren vorgestellten bevorzugten Ausführungsformen und deren Vorteile gelten entsprechend für die erfindungsgemäße Überwachungsvorrichtung, für das erfindungsgemäße Fahrerassistenzsystem sowie für das erfindungsgemäße Gespann.

Weitere Merkmale der Erfindung ergeben sich aus den Ansprüchen, den Figuren und der Figurenbeschreibung. Die vorstehend in der Beschreibung genannten Merkmale und Merkmalskombinationen, sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen. Es sind somit auch Ausführungen von der Erfindung als umfasst und offenbart anzusehen, die in den Figuren nicht explizit gezeigt und erläutert sind, jedoch durch separierte Merkmalskombinationen aus den erläuterten Ausführungen hervorgehen und erzeugbar sind. Es sind auch Ausführungen und Merkmalskombinationen als offenbart anzusehen, die somit nicht alle Merkmale eines ursprünglich formulierten unabhängigen Anspruchs aufweisen. Es sind darüber hinaus Ausführungen und Merkmalskombinationen, insbesondere durch die oben dargelegten Ausführungen, als offenbart anzusehen, die über die in den Rückbezügen der Ansprüche dargelegten Merkmalskombinationen hinausgehen oder abweichen.

Die Erfindung wird nun anhand von bevorzugten Ausführungsbeispielen sowie unter Bezugnahme auf die beigefügten Zeichnungen näher erläutert.

Dabei zeigen:
- Fig. 1: eine schematische Darstellung einer Ausführungsform eines erfindungsgemäßen Gespanns;
- Fig. 2: ein Ablaufplan einer Ausführungsform eines erfindungsgemäßen Verfahrens;
- Fig. 3: eine schematische Darstellung des Gespanns mit stationären und dynamischen Kenngrößen des Gespanns;
- Fig. 4: eine schematische Darstellung eines Kalman-Filters zur Bestimmung von Parametern des Anhängers;
- Fig. 5: eine schematische Darstellung des Gespanns mit einem Fußgänger hinter dem Anhänger;
- Fig. 6: eine schematische Darstellung des Gespanns bei einem Überholmanöver;
- Fig. 7: eine schematische Darstellung des Gespanns beim Rückwärtseinparken in eine Parklücke; und
- Fig. 8: eine schematische Darstellung des Gespanns beim Rückwärtsfahren aus einer Sackgasse.

In den Figuren sind gleiche sowie funktionsgleiche Elemente mit den gleichen Bezugszeichen versehen.

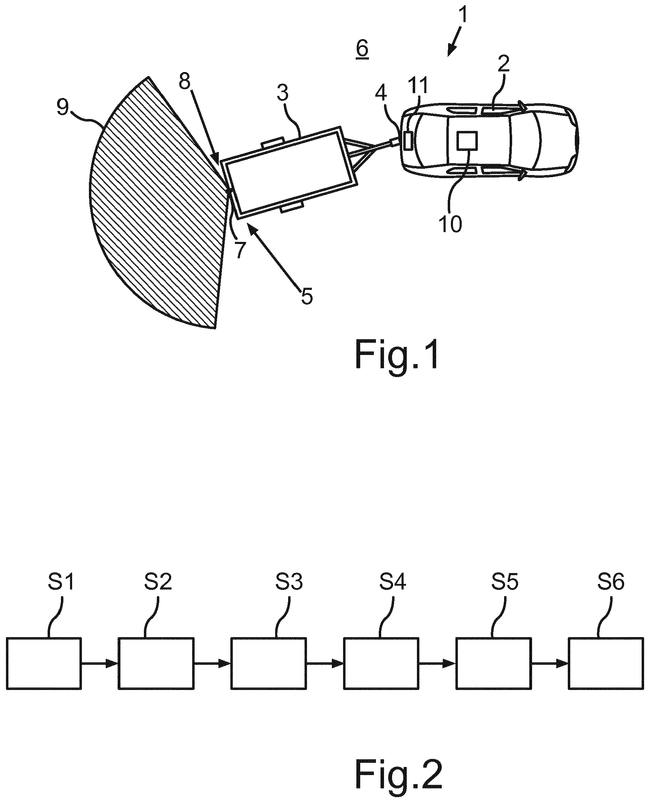

Fig. 1 zeigt ein Gespann 1 gemäß einer Ausführungsform der vorliegenden Erfindung. Das Gespann 1 weist ein Kraftfahrzeug 2 auf, welches im vorliegenden Fall als ein Personenkraftwagen ausgebildet ist. Außerdem weist das Gespann 1 einen Anhänger 3 auf, welcher über eine Anhängerkupplung 4 des Kraftfahrzeugs 2 an das Kraftfahrzeug 2 angekoppelt ist und schwenkbar bezüglich des Kraftfahrzeugs 2 ist. Das Gespann 1 weist eine Überwachungsvorrichtung 5 auf, welche dazu ausgelegt ist, einen Umgebungsbereich 6 des Gespanns 1 zu überwachen. Die Überwachungsvorrichtung 5 weist zumindest einen Radarsensor 7 auf, welcher an einem Heckbereich 8 des Anhängers 3 angeordnet ist und welcher Radarsensordaten aus dem Umgebungsbereich 6 hinter dem Anhänger 3 erfasst. Dazu ist ein Erfassungsbereich 9 des Radarsensors 7 in den Umgebungsbereich 6 hinter dem Anhänger 3 gerichtet. Der Radarsensor 7 ist außerdem dazu ausgelegt, die erfassten Radarsensordaten an eine Steuereinrichtung 10 des Kraftfahrzeugs 2 zu übermitteln. Insbesondere sind dazu der Radarsensor 7 sowie die Steuereinrichtung 10 über eine Drahtlosverbindung miteinander verbunden. Über die Drahtlosverbindung kann die Steuereinrichtung 10 den Radarsensor 7 außerdem fernsteuern. Außerdem kann das Kraftfahrzeug 2 zumindest eine Sensoreinrichtung 11 aufweisen, welche Sensordaten aus dem Umgebungsbereich 6 des Gespanns 1 erfassen kann.

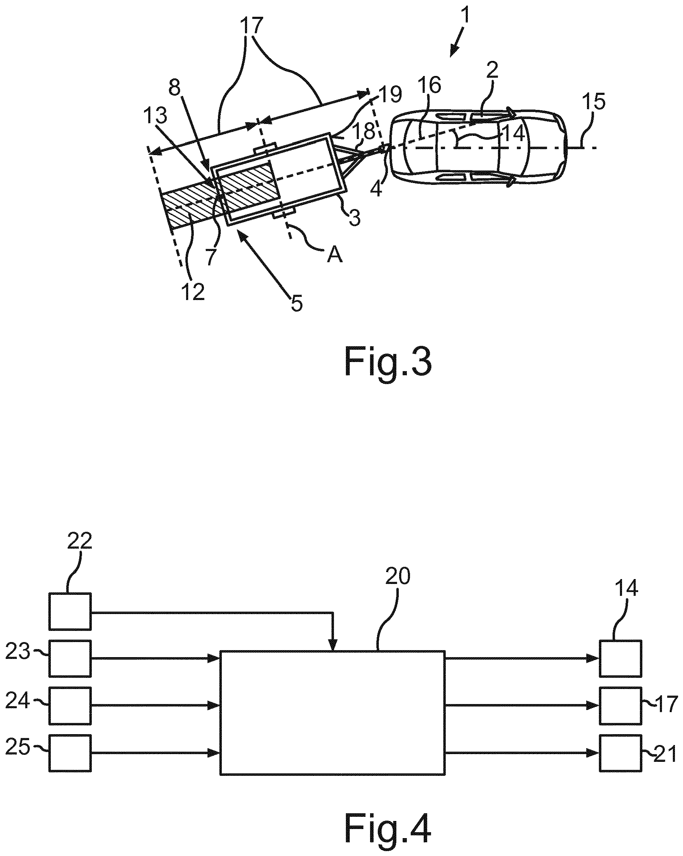

Der Radarsensor 7 kann dabei als ein portabler, mobiler Radarsensor 7 ausgebildet sein, welcher von einem Fahrer des Gespanns 1 beliebig am Anhänger 3 montiert und wieder demontiert werden kann. Im Falle, dass der Radarsensor 7 als ein portabler Radarsensor 7 ausgebildet ist, kann ein Verfahren durchgeführt werden, welches in Fig. 2 schematisch dargestellt ist. Dabei wird in einem ersten Schritt S1 der Radarsensor 7 an dem Heckbereich 8 des Anhängers 3 montiert. In einem zweiten Schritt S2 kann der Radarsensor 7 kalibriert werden, indem, wie in Fig. 3 gezeigt, ein Toleranzbereich 12 für eine mögliche Montageposition 13 des Radarsensors 7 bestimmt wird. Zum Bestimmen des Toleranzbereiches 12 kann beispielsweise anhand den Sensordaten der Sensoreinrichtung 11 des Kraftfahrzeugs 2 eine erste Umfeldkarte bestimmt werden, welche den Umgebungsbereich 6 objektbasiert beschreibt. Anhand der Radarsensordaten des Radarsensors 7 kann eine zweite Umfeldkarte bestimmt werden, welche den Umgebungsbereich 6 des Anhängers 3 objektbasiert beschreibt. Anhand eines Vergleichs der beiden Umfeldkarten kann dann der Toleranzbereich 12 bestimmt werden, welcher die tatsächliche Montageposition 13 des Radarsensors 7 umfasst.

Da die tatsächliche Montageposition 13 abhängig ist von einer Lage und einer Geometrie des Anhängers 3 kann in einem dritten Schritt S3 zumindest ein Parameter des Anhängers 3 bestimmt werden. Als der zumindest eine Parameter des Anhängers 3 wird insbesondere ein Anhängewinkel 14 als ein Winkel zwischen einer Längsachse 15 des Kraftfahrzeugs 2 und einer Längsachse 16 des Anhängers 3 und ein Abstand 17 zwischen der Anhängerkupplung 4 des Kraftfahrzeugs 2 und einer Achse A des Anhängers 3 bestimmt. Der Abstand 17 setzt sich insbesondere zusammen aus der Länge einer Deichsel 18 des Anhängers 3 sowie einem Abstand zwischen einer Frontseite 19 des Anhängers 3 und der Achse A des Anhängers 3.

Der Anhängewinkel 14 sowie der Abstand 17 können beispielsweise mittels eines Kalman-Filters 20, insbesondere eines Uncented Kalman-Filters 20, bestimmt werden, welcher in Fig. 4 gezeigt ist. Mittels des Kalman-Filters 20 kann außerdem ein Sensoroffset 21 bestimmt werden, welcher von dem verwendeten Typ des Radarsensors 7 abhängig ist. Eingänge des Kalman-Filters 20 sind dabei stationäre Kenngrößen 22 des Kraftfahrzeugs 2, insbesondere geometrische Parameter des Kraftfahrzeugs 2. Solche geometrischen Parameter des Kraftfahrzeugs 2 sind insbesondere ein Radstand des Kraftfahrzeugs 2 sowie ein Abstand zwischen einer Hinterachse des Kraftfahrzeugs 2 und der Anhängerkupplung 4. Außerdem sind Eingänge des Kalman-Filters 20 dynamische Kenngrößen 23, 24 des Kraftfahrzeugs 2, welche die Fahrtrichtung des Kraftfahrzeugs 2 beschreiben. Die Fahrtrichtung des Kraftfahrzeugs 2 nimmt insbesondere Einfluss auf den Anhängewinkel 14 zwischen dem Kraftfahrzeug 2 und dem Anhänger 3. Diese dynamischen Kenngrößen des Kraftfahrzeugs 2 sind insbesondere Radlenkwinkel 23 von Vorderrädern des Kraftfahrzeugs 2 sowie Radlenkwinkel 24 von Hinterrädern des Kraftfahrzeugs 2. Ein weiterer Eingang des Kalman-Filters 20 ist eine dynamische Kenngröße des Anhängers 3, welche insbesondere ein gemessener Anhängewinkel 14 ist. Der Anhängewinkel 14 kann beispielsweise mittels einer Sensoreinrichtung in der Anhängerkupplung 4 und/oder über Bilder einer nach unten in Richtung der Anhängerkupplung 4 blickenden Heckkamera des Kraftfahrzeugs 2 erfasst bzw. gemessen werden.

Anhand der in Schritt S3 bestimmten Parameter 14, 17 des Anhängers 3 kann außerdem ein von dem Anhänger 3 belegte Bereich in dem Umgebungsbereich 6 des Kraftfahrzeugs 2 bestimmt werden. In einem vierten Schritt S4 können anhand des von dem Anhänger 3 belegten Bereiches in dem Umgebungsbereich 6 Messpunkte in Sensordaten, welche von der Sensoreinrichtung 11 des Kraftfahrzeugs 2 erfasst wurden und welche zu dem Anhänger 3 gehören, herausgefiltert werden. So kann verhindert werden, dass der Fahrer des Gespanns 1 vor dem Anhänger 3 gewarnt wird, welcher tatsächlich kein Hindernis für das Kraftfahrzeug 2 darstellt. In einem fünften Schritt S5 des Verfahrens können Objekte in dem Umgebungsbereich 6, welche basierend auf den Sensordaten der Sensoreinrichtung 11 des Kraftfahrzeugs 2 sowie wie basierend auf den Radarsensordaten des Radarsensors 7 erfasst wurden, in einer gemeinsamen Umfeldkarte hinterlegt werden. Dazu können die erste Umfeldkarte und die zweite Umfeldkarte zu der gemeinsamen Umfeldkarte fusioniert bzw. kombiniert werden.

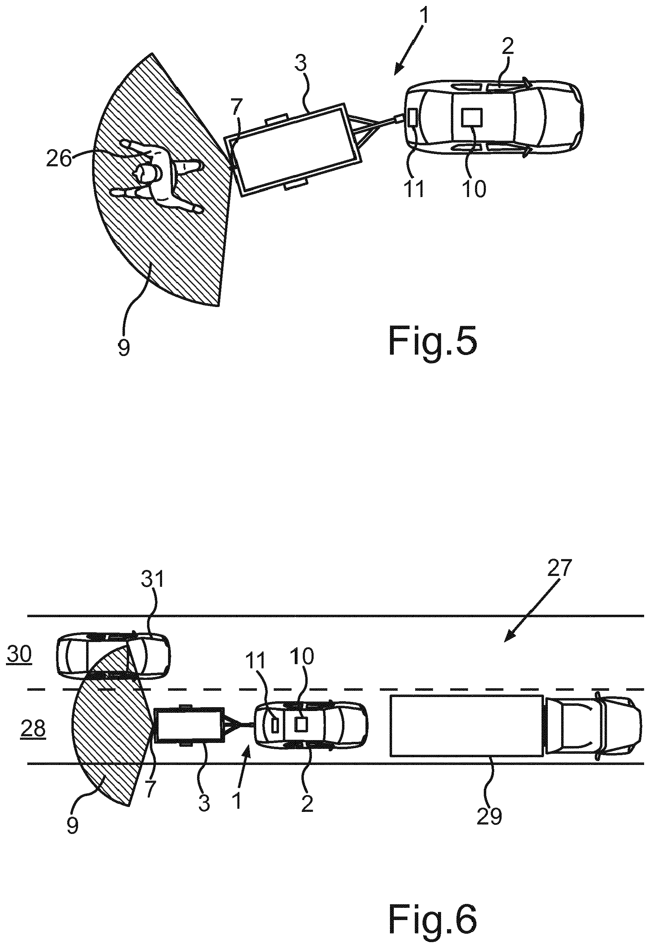

In einem sechsten Schritt S6 des Verfahrens können basierend auf der fusionierten Umfeldkarte mittels eines Fahrerassistenzsystems des Gespanns 1 eine Vielzahl von Assistenzfunktionen für den Fahrer des Gespanns 1 bereitgestellt werden, welche beispielhaft in Fig. 5 bis Fig. 8 gezeigt sind. In Fig. 5 ist beispielsweise gezeigt, dass sich ein Fußgänger 26 hinter dem Anhänger 3 befindet. Da eine Sicht des Fahrers des Kraftfahrzeugs 2 aufgrund des sich im Sichtfeld des Fahrers befindlichen Anhängers 3 eingeschränkt ist, kann es vorkommen, dass der Fahrer den Fußgänger 26 nicht sieht. Würde der Fahrer das Gespann 1 nun in Rückwärtsrichtung bewegen, so würde der Anhänger 3 mit dem Fußgänger 26 kollidieren. Um dies zu verhindern, wird der Fußgänger 26, welcher sich in dem Erfassungsbereich 9 des Radarsensors 7 des Anhängers 3 befindet, anhand der Radarsensordaten des Radarsensors 7 erfasst. In den Radarsensordaten des Radarsensors 7 befinden sich also Messpunkte, welche mit dem Fußgänger 26 korrespondieren. Diese Messpunkte können beispielsweise von der Steuereinrichtung 10 des Kraftfahrzeugs 2 aus den übermittelten Radarsensordaten extrahiert werden. Somit kann von der Steuereinrichtung 10 erkannt werden, dass sich der Fußgänger 26 hinter dem Anhänger 3 befindet. Nun kann ein Warnsignal an den Fahrer des Kraftfahrzeugs 2 ausgegeben werden, durch welches der Fahrer des Kraftfahrzeugs 2 darauf hingewiesen wird, dass sich der Fußgänger 26 hinter dem Anhänger 3 befindet. Dadurch kann verhindert werden, dass der Fußgänger 26 durch das Gespann 1 verletzt wird.

In Fig. 6 ist das Gespann 1 bei der Fahrt auf einer zweispurigen Straße 27 gezeigt. Das Gespann 1 fährt hier auf einer rechten Spur 28 und folgt einem anderen Fahrzeug, welches hier als ein Lkw 29 ausgebildet ist. Auf einer linken Spur 30 der zweispurigen Straße 27 nähert sich dem Gespann 1 ein weiteres Fahrzeug 31 von hinten. Da das Gespann 1 durch den Anhänger 3 eine im Vergleich zum Kraftfahrzeug 2 größere Länge aufweist, würde der Anhänger 3 mit dem Fahrzeug 31 kollidieren, wenn der Fahrer des Gespanns 1 mit dem Kraftfahrzeug 2 ausscheren würde, beispielsweise um den Lkw 29 zu überholen. Da sich das Fahrzeug 31 jedoch im Erfassungsbereich 9 des Radarsensors 7 befindet, können das Fahrzeug 31, dessen Lage relativ zum Gespann 1 erkannt werden sowie eine Relativgeschwindigkeit zwischen dem Fahrzeug 31 und dem Gespann 1 bestimmt werden. Basierend darauf kann der Fahrer des Gespanns 1 vor dem Fahrzeug 31 gewarnt werden und beispielsweise darauf hingewiesen werden, dass ein Ausscheren bzw. ein Überholmanöver momentan nicht möglich ist.

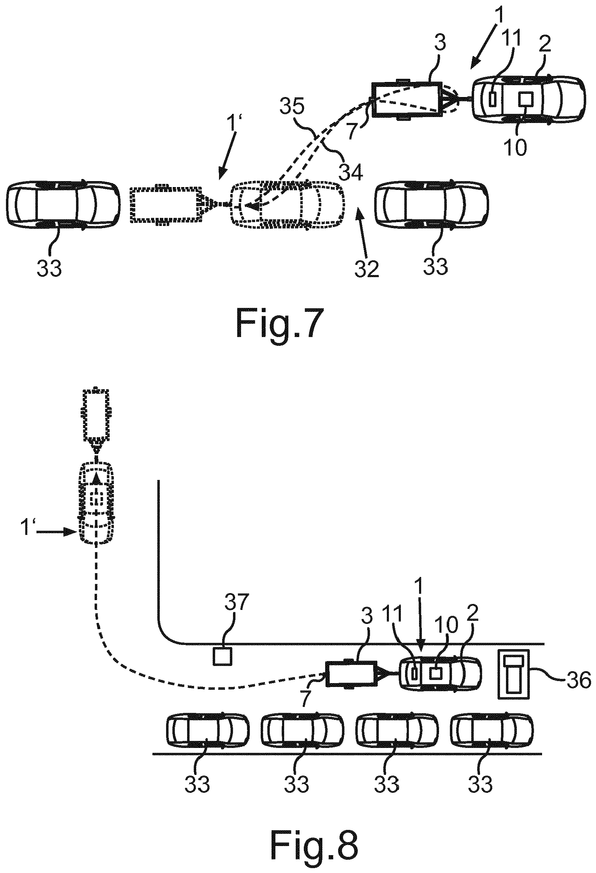

In Fig. 7 ist das Gespann 1 beim Rückwärtseinparken in eine Parklücke 32, welche durch zwei andere Fahrzeuge 33 begrenzt ist, gezeigt. Anhand des Radarsensors 7 kann die Parklücke 32 beispielsweise während einer Vorbeifahrt des Gespanns 1 an der Parklücke 32 vermessen werden. Wenn eine Länge der Parklücke 32 groß genug ist, kann der Fahrer beim Einparken des Gespanns 1 in die Parklücke 32 unterstützt werden. Dazu kann eine erste Fahrtrajektorie 34 für den Anhänger 3 und anhand der ersten Fahrtrajektorie 34 des Anhängers 3 eine zweite Fahrtrajektorie 35 für das Kraftfahrzeug 2 bestimmt werden. Entlang der Fahrtrajektorien 34, 35 kann das Gespann 1 beispielsweise vollautonom in die Parklücke 32 manövriert werden. Auch können die Fahrtrajektorien 34, 35 dem Fahrer des Gespanns 1 auf einer Anzeigeeinrichtung im Kraftfahrzeug 2 angezeigt werden. Beispielsweise kann der Fahrer das Kraftfahrzeug 2 entlang der Fahrtrajektorie 35 in die Parklücke 32 bewegen, wobei dem Fahrer durch das Anzeigen der Fahrtrajektorie 34 des Anhängers 3 die voraussichtliche Bewegung des Anhängers 3 während des Einparkens visualisiert wird. Somit kann das Gespann 1 kollisionsfrei in die Parklücke 32 eingeparkt werden. In der Parklücke 32 kann das Gespann 1' in einer Parkstellung abgestellt werden.

In Fig. 8 ist das Gespann 1 gezeigt, welches sich in einer Sackgasse 36 befindet. In der Sackgasse 36 befindet sich eine Vielzahl von Hindernissen, beispielsweise in Form von geparkten Fahrzeugen 33 und einer Mülltonne 37. Um nun das Gespann 1 und zuverlässig rückwärts aus der Sackgasse 36 zu manövrieren, ohne dabei mit den Hindernissen 33, 37 zu kollidieren, wird mittels des Radarsensors 7 der Umgebungsbereich 6 hinter dem Anhänger 3 erfasst. Informationen über die Hindernisse 33, 37 hinter dem Anhänger 3 können der Steuereinrichtung 10 des Kraftfahrzeugs 2 bereitgestellt werden. Auch kann die Sensoreinrichtung 11 des Kraftfahrzeugs 2 Hindernisse 33, 37 erfassen, welche sich im Sichtfeld der Sensoreinrichtung 11 befinden. Die von der Sensoreinrichtung 11 des Kraftfahrzeugs 2 und dem Radarsensor 7 des Anhängers 3 erfassten Hindernisse können in einer gemeinsamen Umfeldkarte hinterlegt werden, welche den Bereich in der Sackgasse 36 beschreibt. Anhand der Umfeldkarte kann das Gespann 1 autonom aus der Sackgasse 36 manövriert werden und/oder der Fahrer während des Rückwärtsfahrt aus der Sackgasse 36 auf die Hindernisse 33, 37 hingewiesen werden.

## Patentansprüche

1. Verfahren zum Überwachen eines Umgebungsbereiches (6) eines durch ein Kraftfahrzeug (1) und einen Anhänger (3) gebildeten Gespanns (1), bei welchem zumindest ein Radarsensor (7) an einem Heckbereich (8) des Anhängers (3) zum Erfassen von Radarsensordaten aus dem Umgebungsbereich (6) hinter dem Anhänger (3) angeordnet wird und die erfassten Radarsensordaten an eine Steuereinrichtung (10) des Kraftfahrzeugs (2) übertragen werden.

2. Verfahren nach Anspruch 1,
**dadurch gekennzeichnet, dass**
die Radarsensordaten drahtlos an die Steuereinrichtung (10) des Kraftfahrzeugs (2) übertragen werden.

3. Verfahren nach Anspruch 1 oder 2,
**dadurch gekennzeichnet, dass**
der zumindest eine Radarsensor (7) als ein portabler Radarsensor (7) ausgebildet wird, welcher zerstörungsfrei lösbar an dem Heckbereich (8) des Anhängers (3) montiert wird.

4. Verfahren nach einem der vorhergehenden Ansprüche,
**dadurch gekennzeichnet, dass**
der zumindest eine Radarsensor (7) nach dem Montieren des zumindest einen Radarsensors (7) an dem Anhänger (3) automatisch kalibriert wird.

5. Verfahren nach Anspruch 4,
**dadurch gekennzeichnet, dass**
zum Kalibrieren des zumindest einen Radarsensors (7) Sensordaten zumindest einer Sensoreinrichtung (11) des Kraftfahrzeugs (2) und Radarsensordaten des zumindest einen Radarsensors (7) empfangen werden, eine erste den Umgebungsbereich (6) des Gespanns (1) beschreibende Umfeldkarte basierend auf den Sensordaten der zumindest einen Sensoreinrichtung (11) des Kraftfahrzeugs (2) bestimmt wird, eine zweite den Umgebungsbereich (6) des Gespanns (1) beschreibende Umfeldkarte basierend auf den Radarsensordaten des zumindest einen Radarsensors (7) bestimmt wird und anhand eines Vergleiches der Umfeldkarten ein Toleranzbereich (12) für eine Montageposition (13) des zumindest einen Radarsensor (7) an dem Anhänger (3) bestimmt wird.

6. Verfahren nach Anspruch 4 oder 5,
**dadurch gekennzeichnet, dass**
zum Bestimmen einer tatsächlichen Montageposition (13) des zumindest einen Radarsensors (7) am Anhänger (3) zumindest ein Parameter (14, 17) des Anhängers (3) bestimmt wird, wobei der zumindest eine Parameter (14, 17) des Anhängers (3) in Abhängigkeit von zumindest einer vorbestimmten stationären Kenngröße (22) des Kraftfahrzeugs (2) und/oder zumindest einer erfassten dynamischen Kenngröße (23, 24) des Kraftfahrzeugs (2) und/oder zumindest einer erfassten dynamischen Kenngröße (25) des Anhängers (3) bestimmt wird.

7. Verfahren nach Anspruch 6,
**dadurch gekennzeichnet, dass**
als der zumindest eine Parameter (14, 17) des Anhängers (3) ein Anhängewinkel (14) des Anhängers (3) und/oder ein Abstand (17) zwischen einer Anhängerkupplung (4) am Kraftfahrzeug (2) und einer Achse (A) des Anhängers (3) bestimmt wird.

8. Verfahren nach Anspruch 6 oder 7,
**dadurch gekennzeichnet, dass**
als die zumindest eine stationäre Kenngröße (22) des Kraftfahrzeugs (2) ein Radstand des Kraftfahrzeugs (2) und/oder ein Abstand zwischen einer Hinterachse und einer Anhängerkupplung (4) des Kraftfahrzeugs (2) vorgegeben wird, als die zumindest eine dynamische Kenngröße (23, 24) des Kraftfahrzeugs (2) ein Radlenkwinkel (23) von Vorderrädern und/oder ein Radlenkwinkel (24) von Hinterrädern des Kraftfahrzeugs (2) erfasst wird und als die zumindest eine dynamische Kenngröße (25) des Anhängers ein Anhängewinkel (14) des Anhängers (3) erfasst wird.

9. Verfahren nach einem der Ansprüche 6 bis 8,
**dadurch gekennzeichnet, dass**
der zumindest eine Parameter (14, 17) des Anhängers (3) in Abhängigkeit von der zumindest einen vorbestimmten stationären Kenngröße (22) des Kraftfahrzeugs (2) und/oder der zumindest einen erfassten dynamischen Kenngröße (23, 24) des Kraftfahrzeugs (2) und/oder der zumindest einen erfassten dynamischen Kenngröße (25) des Anhängers (3) mittels eines Kalman-Filters (2) bestimmt wird.

10. Verfahren nach einem der Ansprüche 6 bis 9,
**dadurch gekennzeichnet, dass**
anhand des zumindest einen Parameters (14, 17) des Anhängers (3) ein von dem Anhänger (3) in dem Umgebungsbereich (6) belegter Bereich erkannt wird, wobei anhand des von dem Anhänger (3) belegten Bereiches Messpunkte in Sensordaten einer fahrzeugseitigen Sensoreinrichtung (11) als zu dem Anhänger (3) oder zu dem Umgebungsbereich (6) gehörig klassifiziert werden.

11. Verfahren nach einem der vorhergehenden Ansprüche,
**dadurch gekennzeichnet, dass**
eine erste den Umgebungsbereich (6) beschreibende Umfeldkarte basierend auf Sensordaten zumindest einer Sensoreinrichtung (11) des Kraftfahrzeugs (2) bestimmt wird, eine zweite den Umgebungsbereich (6) beschreibende Umfeldkarte basierend auf den Radarsensordaten des zumindest einen Radarsensors (7) bestimmt wird und die erste und die zweite Umfeldkarte zu einer gemeinsamen Umfeldkarte fusioniert werden.

12. Überwachungsvorrichtung (5) für einen Anhänger (3) eines aus einem Kraftfahrzeug (2) und dem Anhänger (3) gebildeten Gespanns (1), welche dazu ausgelegt ist, einen Umgebungsbereich (6) des Gespanns (1) zu überwachen, und welche zumindest einen Radarsensor (7) aufweist, welcher an einem Heckbereich (8) des Anhängers (3) zum Erfassen von Radarsensordaten aus dem Umgebungsbereich (6) hinter dem Anhänger (3) montierbar ist und welcher dazu ausgelegt ist, die erfassten Radarsensordaten an eine Steuereinrichtung (10) des Kraftfahrzeugs (2) zu übermitteln.

13. Fahrerassistenzsystem für ein Gespann (1) aufweisend eine Überwachungsvorrichtung (5) nach Anspruch 12 sowie eine Steuereinrichtung (10) zum Empfangen der Radarsensordaten.

14. Gespann (1) aufweisend ein Kraftfahrzeug (2), einen Anhänger (3) sowie ein Fahrerassistenzsystem nach Anspruch 13, wobei der zumindest eine Radarsensor (7) der Überwachungsvorrichtung (5) an dem Anhänger (3) montiert ist.
